# EUROPÄISCHE PATENTSCHRIFT

(11) **EP 2 893 236 B1**
(45) Veröffentlichungstag und Bekanntmachung des Hinweises auf die Patenterteilung: **11.01.2017**
(21) Anmeldenummer: 13756822.6
(22) Anmeldetag: 27.08.2013
(51) Int. Cl.: F16L 3/22, H02G 3/32, F03D 80/80

(54) **BEFESTIGUNGSSYSTEM FÜR STRANGELEMENTE, INSBESONDERE BEI WINDKRAFTANLAGEN**
ATTACHMENT SYSTEM FOR ELONGATE MEMBERS, IN PARTICULAR FOR WIND POWER INSTALLATIONS
SYSTÈME DE FIXATION POUR ÉLÉMENTS ALLONGÉS, EN PARTICULIER POUR INSTALLATIONS ÉOLIENNES

(30) Priorität: 04.09.2012 DE 102012017463
(43) Veröffentlichungstag der Anmeldung: 15.07.2015
(73) Patentinhaber: HYDAC Accessories GmbH, 66280 Sulzbach/Saar (DE)
(72) Erfinder: SCHMITT, Martin, 66917 Knopp-Labach (DE)
(74) Vertreter: Bartels, Martin Erich Arthur
(86) Internationale Anmeldenummer: PCT/EP2013/002578
(87) Internationale Veröffentlichungsnummer: WO 2014/037084

(56) Entgegenhaltungen:
- EP-A1- 1 847 746
- WO-A1-2014/206536
- DE-A1-102010 032 687
- DE-A1-102011 012 391

## Beschreibung

Die Erfindung betrifft ein Befestigungssystem für Strangelemente, wie Kabel, Schläuche oder Rohre, insbesondere für Windkraftanlagen, mit den Merkmalen im Oberbegriff von Anspruch 1.

Befestigungssysteme dieser Art sind Stand der Technik. Beispielsweise offenbart das Dokument DE 10 2010 032 687 A1 ein Befestigungssystem dieser Gattung, das insbesondere für einen Einsatz bei Windkraftanlagen vorgesehen ist. Um die in Windkraftanlagen erzeugten Energien abzuführen, sowie für andere betriebliche Zwecke, wie Steuerung, Überwachung und dergleichen, sind Strangelemente, wie Kabel zur Leistungsübertragung, Schläuche, Rohre und/oder Leitungen für Steuerungs- oder Kommunikationszwecke, die vom Maschinenhaus in den Turm führen, an entsprechenden Tragstrukturen, insbesondere den Turmsegmenten zuverlässig festzulegen. Bei der vorstehend genannten, bekannten Lösung sind zu diesem Zweck an einem Tragkörper Strangaufnahmen in einer sich zumindest über einen Teil eines Ringes erstreckenden Anordnung mit außenliegender Öffnung angebracht. Um auf in die betreffenden Strangaufnahmen eingelegte Strangelemente eine Haltekraft auszuüben, sind bei der erwähnten bekannten Lösung Andrückeinrichtungen mit federbelastetem, auf betreffende Strangelemente einwirkendem Drückerteil an der Öffnung der jeweiligen Strangaufnahmen mittels eines über die Strangaufnahmen und über die jeweiligen Andrückeinrichtungen geführten Spannbandes festgelegt. Der Zwang, den die Strangaufnahmen aufweisenden Tragkörper mit einem die Haltekräfte aufnehmenden Spannband zu umgeben, führt zu einer Komplizierung des Systems, insbesondere bei bestimmten Formen von Tragkörpern, wie Teilkreisformen, Halbmondformen, bei denen kein Umfangsbereich für einen geschlossenen Ring des Spannbandes gegeben ist, so dass Verankerungspunkte für Enden des Spannbandes gebildet werden müssen. Zudem lassen sich mittels eines Spannbandes sämtliche Strangaufnahmen nur gleichzeitig durch Anlegen und Anspannen des Spannbandes in der Funktionsposition sichern. Um ein Herausfallen eingelegter Strangelemente vor dem Anlegen des Spannbandes zu vermeiden, ist man daher gezwungen, die jeweilige Andrückeinrichtung mit einer Rasteinrichtung zu versehen, die eine Vorfixierung bewirkt, bevor das die eigentliche Haltekraft aufnehmende Spannband angebracht wird.

Die DE 10 2011 012 391 A1 beschreibt ein Befestigungssystem für Strangelemente, wie Kabel, Schläuche oder Rohre, insbesondere bei Windkraftanlagen, mit mindestens einer Strangaufnahme mit einer zum Einlegen zumindest eines Strangelements vorgesehenen Öffnung und mit einer an der Öffnung der jeweiligen Strangaufnahme in einer Funktionsposition anbringbaren Andrückeinrichtung, die ein federbelastetes, bewegbares Drückerteil aufweist, das bei der Funktionsposition eine Haltekraft auf in die jeweilige Strangaufnahme eingelegte Strangelemente ausübt, wobei eine lösbare Riegeleinrichtung vorgesehen ist, die bei der Funktionsposition zwischen Andrückeinrichtung und Strangaufnahme eine Verriegelung durch formschlüssigen Riegeleingriff ermöglicht.

Ausgehend von diesem Stand der Technik stellt sich die Erfindung die Aufgabe, ein Befestigungssystem der betrachteten Art zur Verfügung zu stellen, das sich bei verringertem baulichem Aufwand durch einfache Bedienbarkeit auszeichnet.

Erfindungsgemäß ist diese Aufgabe durch ein Befestigungssystem gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die Andrückeinrichtung einen Grundkörper aufweist, an dem das Drückerteil verschiebbar geführt ist und an dem ein Riegelkörper der Riegeleinrichtung für Bewegungen zwischen einer wirksamen Verriegelungsposition und einer unwirksamen Freigabeposition bewegbar angeordnet ist.

Es ist vorgesehen, dass eine lösbare Riegeleinrichtung vorgesehen ist, die bei der Funktionsposition zwischen Andrückeinrichtung und Strangaufnahme eine Verriegelung durch formschlüssigen Riegeleingriff ermöglicht. Dadurch, dass anstelle einer Verrastung der jeweiligen Andrückeinrichtungen, die lediglich eine Vorfixierung für diese bildet, eine Riegeleinrichtung für einen formschlüssigen Riegeleingriff zwischen betreffenden Andrückeinrichtungen und Strangaufnahmen vorgesehen ist, entfällt die Notwendigkeit für ein die Haltekraft aufnehmendes Spannband. Zudem gestaltet sich die Montage einfacher, weil ein gesonderter Arbeitsschritt für eine Vorfixierung eingelegter Strangelemente überflüssig wird, weil bei der Bestückung der Strangaufnahmen jede für sich derart verriegelbar ist, dass eingelegte Strangelemente nicht nur gegen Herausfallen gesichert, sondern auch mit wirksamer Haltekraft festgelegt sind.

Bei besonders vorteilhaften Ausführungsbeispielen ist die Andrückeinrichtung an der zugeordneten Strangaufnahme für Schwenkbewegungen zwischen die Öffnung freigebenden Offenstellungen und der Funktionsstellung angelenkt, in der sie die Öffnung zumindest teilweise verschließt. Dank der Gelenkverbindung mit der jeweils betreffenden Strangaufnahme sind die Andrückeinrichtungen auch verliersicher und vormontierbar an den jeweiligen Strangaufnahmen anbringbar, so dass sie beim Montageeinsatz des Befestigungssystems nicht gesondert gehandhabt werden müssen.

Hinsichtlich der Bauform der Andrückeinrichtung kann die Anordnung mit Vorteil so getroffen sein, dass das Drückerteil die Form einer im großen Ganzen rechteckförmigen Schale besitzt, deren Boden an zu fixierende Strangelemente andrückbar ist, wobei der Grundkörper einen Schalenteil aufweist, in dem die Wände der Schale des Drückerteils bewegbar geführt sind, und wobei der durch die Schale und den Schalenteil des Grundkörpers gebildete Innenraum als Federgehäuse für eine zwischen Grundkörper und Drückerteil wirkende Federanordnung vorgesehen ist.

Bei besonders vorteilhaften Ausführungsbeispielen weist der Grundkörper an seinem einen Ende eine Lagerstelle für die Bildung eines Schwenklagers am einen Rand der Öffnung der betreffenden Strangaufnahme auf, die am gegenüberliegenden, anderen Rand der Öffnung eine Rastvertiefung für formschlüssigen Eingriff des Riegelkörpers der Riegeleinrichtung aufweist.

Mit besonderem Vorteil weist der Grundkörper eine zu der Lagerstelle entgegengesetzte Frontwand und eine den Schalenteil an der vom Drückerteil abgewandten Oberseite begrenzende Wand auf, wobei an deren Oberseite eine Führung gebildet ist, längs deren der Riegelkörper Bewegungen zwischen Riegelstellungen, in der ein Riegelhaken des Riegelkörpers über die Frontwand vorsteht, und gegen die Lagerstelle in zurückgezogenen Freigabestellungen bewegbar ist, und wobei der Riegelkörper durch Federkraft gegen die Riegelstellung vorgespannt ist. Bei einer derartigen verschiebbaren Anordnung des Riegelkörpers, bei der der zugehörige Riegelhaken federnd aus der Frontwand vorsteht, die dem Öffnungsrand der betreffenden Strangaufnahme zugewandt ist, an dem sich die Rastvertiefung befindet, kann der Riegeleingriff durch einfaches Schwenken der Andrückeinrichtung in die Funktionsposition erfolgen, indem der Rasthaken bei Überlaufen des Öffnungsrandes gegen die Federkraft zurückbewegt wird, bis er bei Erreichen der Rastvertiefung durch die Federkraft in die Rastvertiefung einfällt. Dadurch kommt es im Zuge der Schließbewegung der Andrückeinrichtung selbsttätig zur Verriegelung, so dass sich die Montage besonders einfach gestaltet.

Bei besonders vorteilhaften Ausführungsbeispielen ist eine am Grundkörper anbringbare Kappe vorgesehen, die in der am Grundkörper angebrachten Stellung die an der Oberseite der zugeordneten Wand des Grundkörpers befindliche Führung des Riegelkörpers sowie mit einem Endteil die Frontwand überdeckt, wobei im Endteil mindestens ein Durchgang für den Durchtritt von Teilen des Riegelkörpers vorgesehen ist.

Bei einer derartigen Anordnung können in vorteilhafter Weise als Teile des Riegelkörpers, die bei der Riegelstellung durch Durchgänge des Endteils hindurch vorstehen, ein Riegelhaken, der bei der Funktionsposition in die Rastvertiefung der Strangaufnahme formschlüssig eingreift, sowie ein Lösevorsprung vorgesehen sein, der am Riegelkörper gegenüber dem Riegelhaken derart versetzt ist, dass er bei der Funktionsposition außerhalb der Strangdurchführung zugänglich ist. Durch Druck auf den von außen her zugänglichen Lösevorsprung lässt sich durch Zurückschieben des Riegelkörpers gegen die angreifende Federkraft die Verriegelung bei Bedarf auf einfache Weise lösen.

Bei besonders vorteilhaften Ausführungsbeispielen sind im Schalenteil des Grundkörpers und in der Schale des Drückerteils Führungszylinder ausgebildet, die miteinander Teleskopführungen für die Bewegungen des Drückerteils relativ zum Grundkörper bilden, wobei die Federanordnung Schrauben-Druckfedern aufweist, die die Außenseite der Teleskopführungen umgeben.

Nachstehend ist die Erfindung anhand eines in der Zeichnung dargestellten Ausführungsbeispiels im Einzelnen erläutert. Es zeigen:
- Fig. 1: eine Seitenansicht einer einzelnen Strangaufnahme eines Ausführungsbeispiels des erfindungsgemäßen Befestigungssystems, dargestellt im geöffneten Zustand und mit drei eingelegten Strangelementen in Form von lediglich schematisch angedeuteten Leistungskabeln;
- Fig. 2 und 3: der Fig. 1 entsprechende Ansichten, wobei Fig. 2 den Zustand bei geschlossener Strangaufnahme vor Erreichen des Verriegelungszustandes und Fig. 3 den Verriegelungszustand mit in eine Rastvertiefung eingefallenem Riegelhaken zeigt;
- Fig. 4: eine perspektivische Schrägansicht einer einzelnen Andrückeinrichtung gemäß dem Ausführungsbeispiel der Erfindung;
- Fig. 5: eine perspektivische Schrägansicht der Andrückeinrichtung von Fig. 4, gesehen auf die Bodenseite eines Drückerteils;
- Fig. 6: in perspektivischer Schrägansicht und explosionsartig auseinandergezogener Darstellung die Einzelteile der Andrückeinrichtung;
- Fig. 7: die Andrückeinrichtung in perspektivischer Schrägansicht, in Längsrichtung aufgeschnitten;
- Fig. 8: eine perspektivische Schrägansicht lediglich des Grundkörpers des Ausführungsbeispiels der Andrückeinrichtung, gesehen auf dessen Unterseite; und
- Fig. 9: eine perspektivische Schrägansicht lediglich der Drückerteils der Andrückeinrichtung.

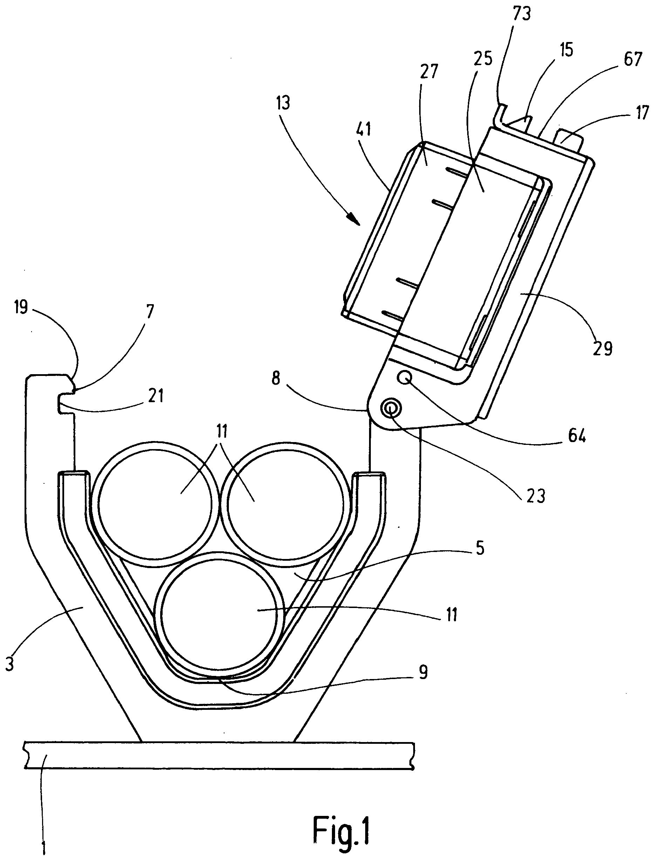

In Fig. 1 bis 3 sind ein Tragkörper 1 für eine daran befestigte Strangaufnahme 3 lediglich schematisiert als Abschnitt eines Trägerbandes angedeutet.

Bei praktischen Ausführungen kann es sich dabei, wie in dem genannten Dokument DE 10 2010 032 687 A1 gezeigt, um einen Ringkörper oder einen Teil eines Ringkörpers (eine Art Halbmond) oder dergleichen handeln. Die in Aufeinanderfolge am Tragkörper 1 angebrachten Strangaufnahmen 3, von denen in Fig. 1 bis 3 lediglich eine Strangaufnahme 3 gezeigt ist, sind durch einteilige Kunststoffteile gebildet, die für einzulegende Stränge einen Aufnahmeraum 5 begrenzen, der muldenartig die Form eines Troges besitzt, der sich von einer in der Zeichnung obenliegenden Öffnung, deren Öffnungsränder mit 7 und 8 bezeichnet sind, mit im Wesentlichen V-förmiger Verjüngung zu einem flachen Bodenteil 9 erstreckt. Beim vorliegenden Beispiel sind in den Aufnahmeraum 5 drei Strangelemente in Form von Leistungskabeln 11 gleichen Durchmessers eingelegt.

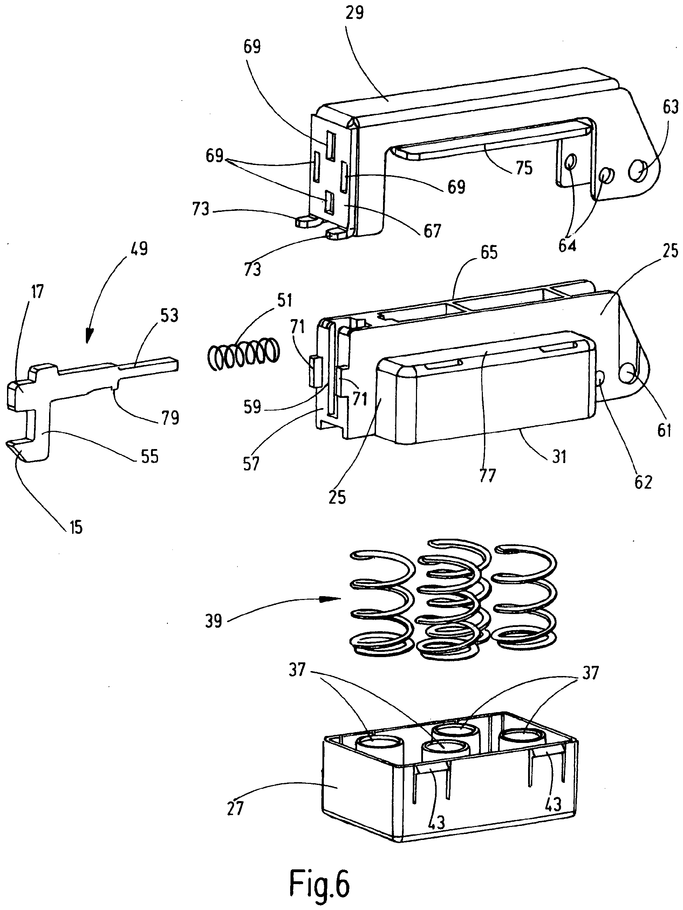

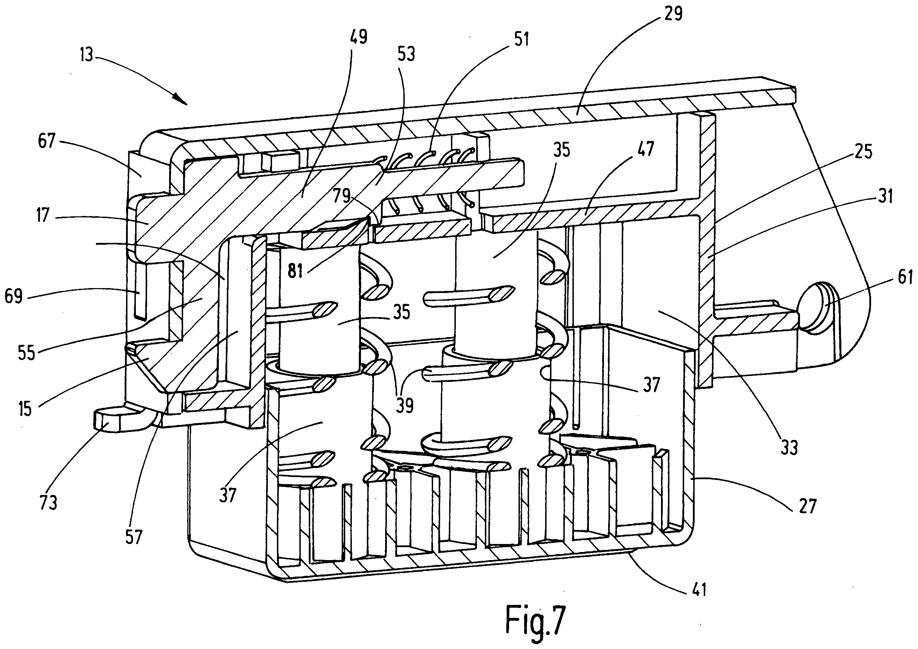

Bei der Darstellung von Fig. 1 ist die zwischen den Öffnungsrändern 7, 8 befindliche Öffnung der Strangaufnahme 3 für das Einlegen von Kabeln 11 offen, wobei eine am Öffnungsrand 8 schwenkbar angelenkte Andrückeinrichtung 13 in eine Offenstellung geschwenkt dargestellt ist. Dabei befinden sich unter dem Einfluss einer in der Andrückeinrichtung 13 befindlichen Riegelfeder 51 (Fig. 6) der Riegelhaken 15 und ein Lösevorsprung 17, die Bestandteil eines bewegbaren Riegelkörpers 49 (Fig. 6) sind, in einer vorgeschobenen Position, in der sie in Fig. 1 sichtbar sind. Auf die Einzelheiten der den Riegelkörper 49 aufweisenden Riegeleinrichtung wird mit Bezug auf Fig. 6 und 7 unten näher eingegangen. Wie am deutlichsten der Fig. 1 entnehmbar ist, befindet sich am Öffnungsrand 7 der Strangaufnahme 3 vor einer Rastvertiefung 21 eine Anlaufschräge 19, an der bei einer Schwenkbewegung der Andrückeinrichtung 13 um das am Öffnungsrand 7 der Strangaufnahme 3 befindliche Schwenklager 23 der Riegelhaken 15 anläuft und gegen die Kraft der Riegelfeder 51 nach innen verschoben wird, bis der Riegelhaken 15 in die Rastvertiefung 21 unter der Wirkung der Riegelfeder 51 einfällt und die Andrückeinrichtung 13 an der Strangaufnahme 3 formschlüssig verriegelt.

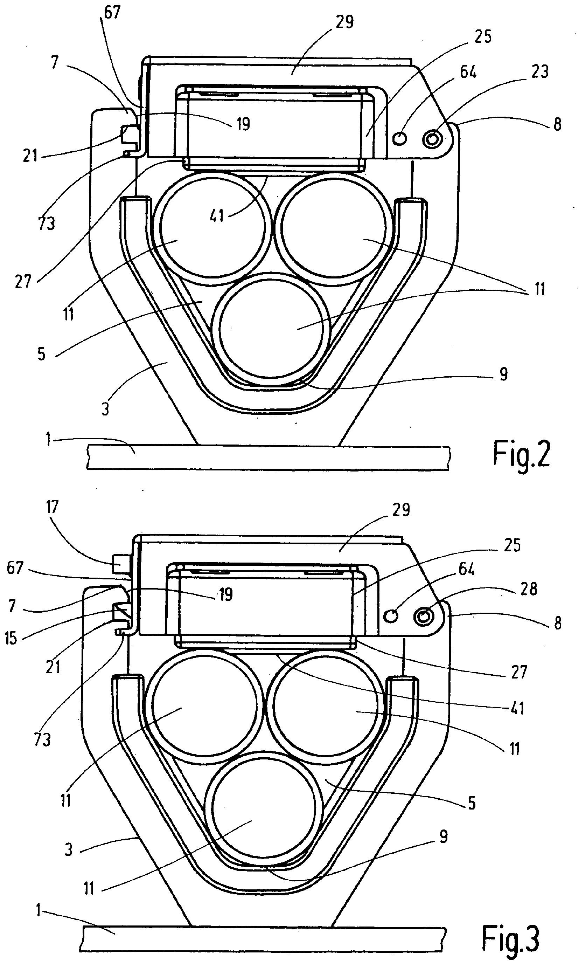

Die Fig. 2 zeigt den Zustand, bei dem der Riegelhaken 15 die Schräge 19 überlaufen hat, jedoch noch nicht in die Rastvertiefung 21 eingefallen ist. Bei diesem dargestellten Zustand ist der Riegelhaken 15 noch ins Innere der Andrückeinrichtung 13 zurückgeschoben, wie auch der Lösevorsprung 17, der Bestandteil des den Riegelhaken 15 aufweisenden Riegelkörpers 49 ist. Demgegenüber zeigt Fig. 3 den Zustand der vollständig verriegelten Schließstellung, wobei der Riegelhaken 15 in die Rastvertiefung 21 eingefallen ist und der Lösevorsprung 17 dementsprechend vorsteht und oberhalb des Öffnungsrandes 7 für eine Lösebetätigung der Riegeleinrichtung zugänglich ist.

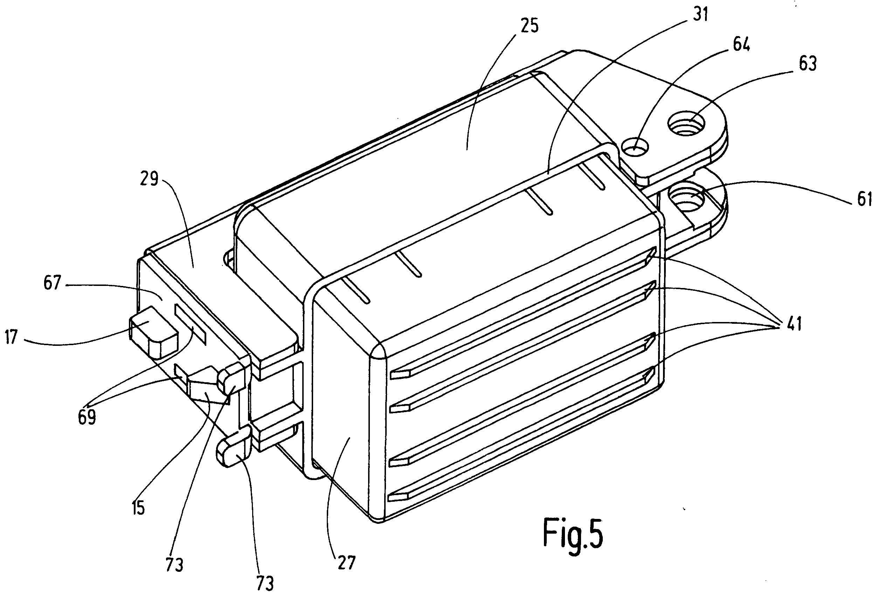

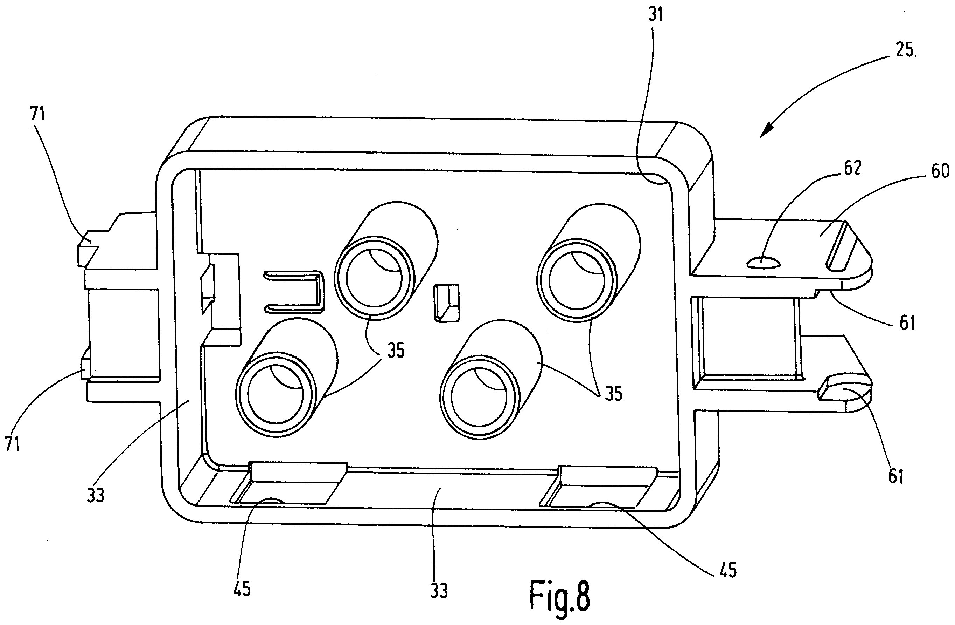

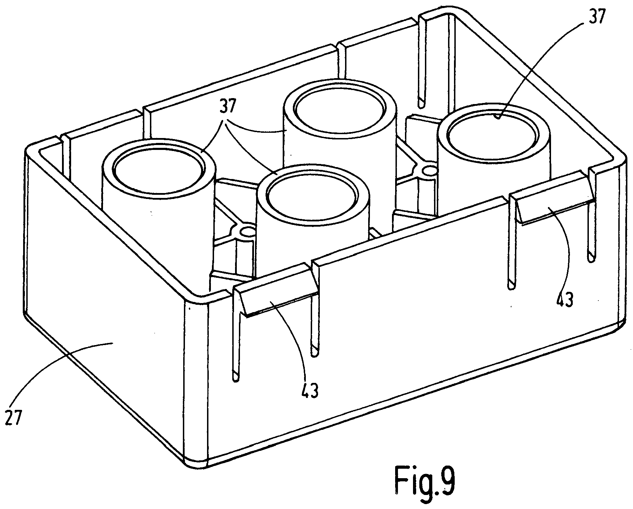

Die Fig. 6 bis 9 zeigen nähere Einzelheiten der Bauweise der Andrückeinrichtung 13. Wie insbesondere der Fig. 6 entnehmbar ist, weist diese drei Hauptteile auf, nämlich einen Grundkörper 25, ein Drückerteil 27 und eine Kappe 29. Grundkörper 25 und Druckerteil 27 sind je einstückig aus Kunststoff spritzgeformt, während die Kappe 29 ein Formteil aus Metallblech ist. Der Grundkörper 25 bildet auf der dem Drückerteil 27 zugewandten Seite einen offenen Schalenteil 31, siehe Fig. 8, mit im Wesentlichen rechteckförmigem Umriss. Das Drückerteil 27 hat die Form einer rechteckförmigen, dem Schalenteil 31 angepassten Schale, die zum Grundkörper 25 hin offen und an den Innenwänden 33 des Schalenteils 31 verschiebbar geführt ist. Vom Boden des Schalenteils 31 des Grundkörpers 25 vorspringende Führungszylinder 35 bilden zusammen mit vom Boden der Schale des Drückerteils 27 vorspringenden, zugeordneten Führungszylindern 37 Teleskopführungen (siehe Fig. 7) für Verschiebebewegungen des Drückerteils 27 relativ zum Grundkörper 25, wobei auf diesen Teleskopführungen Schrauben-Druckfedern 39 als Federanordnung vorgesehen sind, die die Haltekraft vom Grundkörper 25 auf das Drückerteil 27 übertragen, dessen Boden über Druckleisten 41, siehe Fig. 5, die Haltekraft auf eingelegte Kabel 11 überträgt. Um den Austritt des unbelasteten Drückerteils 27 aus dem Schalenteil 31 zu verhindern, sind am Drückerteil 27 federnde Rasthaken 43 angeformt, die in Zusammenwirkung mit Rasten 45 (Fig. 8) an der Innenwand 33 des Schalenteils 31 die Ausfahrbewegungen des Drückerteils 27 begrenzen.

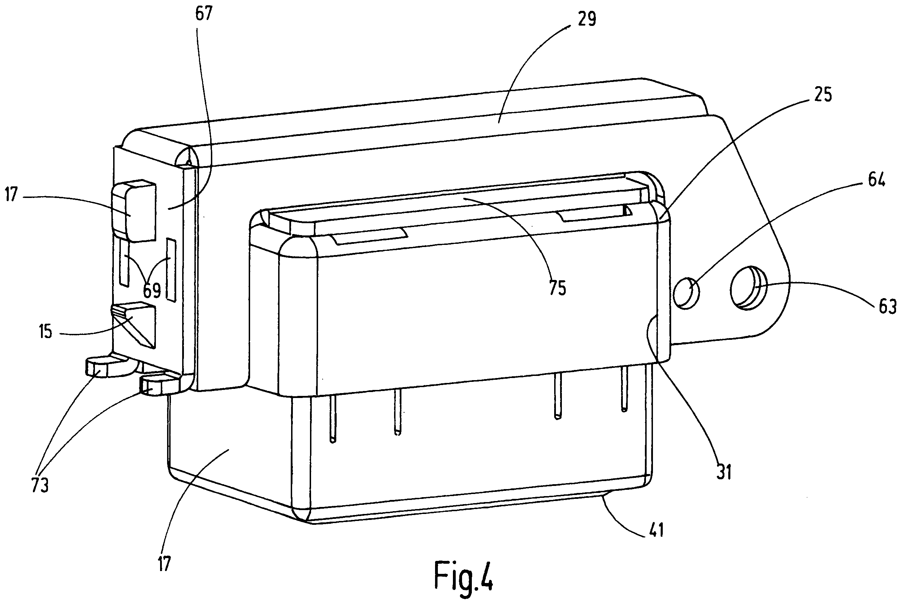

An der Oberseite der den Schalenteil 31 begrenzenden Wand 47 des Grundkörpers 25 befindet sich die Federanordnung für Verschiebebewegungen des Riegelkörpers 49 zwischen der in Fig. 4, 5 und 7 gezeigten, vorgeschobenen Riegelstellung und einer in den Grundkörper 25 hinein zurückgezogenen Stellung, die dem in Fig.2 gezeigten Zustand entspricht. Für die Bewegung in die vorgeschobene Riegelstellung ist der Riegelkörper 49 durch die Riegelfeder 51 vorgespannt. Wie Fig. 6 und 7 zeigen, ist der Riegelkörper 49 durch ein flaches Metallprofil rechteckigen Querschnitts gebildet, das ein langgestrecktes Führungsteil 53 und einen endseitigen, davon abgewinkelten Riegelarm 55 aufweist. An letzterem befinden sich als Vorsprünge der Riegelhaken 15 sowie der Lösevorsprung 17. An der dem Riegelarm 55 zugekehrten Frontwand 57 des Schalenteils 31 ist eine Nut 59 ausgebildet, in die der Riegelarm 55 eintreten kann, wenn der Riegelkörper 49 in die eingefahrene, unwirksame Stellung verschoben wird. An dem der Frontwand 57 entgegengesetzten Ende ist am Grundkörper 25 eine Lagerstelle 61 zur Bildung des Schwenklagers 23 am Öffnungsrand 8 der Strangaufnahme 3 vorgesehen.

Die Kappe 29 weist am einen Ende ebenfalls eine Lagerstelle 63 auf, die im am Grundkörper 25 angebrachten Zustand mit der Lagerstelle 61 fluchtet. Die Kappe 29 überdeckt beim angebrachten Zustand die Oberseite 65 (Fig. 6) des Grundkörpers 25, und damit die Führung des Riegelkörpers 49, und liegt mit ihrem angewinkelten Endteil 67 an der Frontwand 57 des Grundkörpers 25 an. Rechteckförmige Durchgänge 69 im Endteil 67 ermöglichen den Durchtritt von Riegelhaken 15 und Lösevorsprung 17 des Riegelkörpers 49 sowie den Eingriff von Frontnasen 71, die an der Frontwand 57 des Grundkörpers 25 vorspringen. Vom Endteil 67 der Kappe 29 vorspringende Stege 73 liegen bei der in Fig. 3 gezeigten Funktionsposition zu beiden Seiten an der Strangaufnahme 3 an und dienen der Aufnahme von auftretenden Axialbelastungen. Von der Kappe 29 abgewinkelte Leisten 75 liegen an der Oberseite des Schalenteils 31 des Grundkörpers 25 an und bilden Anschlagflächen zur Stabilisierung der Kappe 29 und zur Aufnahme von auftretenden, nicht axialen Kräften. Um bei nicht am Grundkörper 25 angebrachter Kappe 29 den Austritt des Riegelkörpers 49 durch die Kraft der Riegelfeder 51 zu verhindern, ist am Führungsteil 53 des Riegelkörpers 49 ein Vorsprung 79 vorgesehen, der mit einer Nase 81 an der Wand 47 einen Endanschlag für die Verschiebebewegung des Riegelkörpers 49 nach außen bildet.

Wie am besten aus Fig. 8 zu ersehen ist, ist an dem Lagerungsansatz 60, der die Lagerstelle 61 bildet, ein vom Ansatz 60 seitlich vorspringender Astvorsprung in Form einer runden Kuppe 62 gebildet. An der metallischen Kappe 29 ist im gleichen Abstand von deren Lagerstelle 63 eine Rastbohrung 64 ausgebildet, mittels deren die Kappe 29 bei auf den Grundkörper 25 aufgesetzter Position mit diesem verrastbar ist. Dadurch ist sichergestellt, dass im vormontierten Zustand die Lagerstellen 61 und 63 am Grundkörper 25 bzw. der Kappe 29 miteinander in Fluchtung verbleiben. Der Montagevorgang, bei dem mittels der Lagerstellen 61 und 63 das Schwenklager 23 an der Strangaufnahme 3 gebildet wird, gestaltet sich daher einfach und bequem.

## Patentansprüche

1. Befestigungssystem für Strangelemente (11), wie Kabel, Schläuche oder Rohre, insbesondere bei Windkraftanlagen, mit mindestens einer Strangaufnahme (3) mit einer zum Einlegen zumindest eines Strangelements (11) vorgesehenen Öffnung und mit einer an der Öffnung der jeweiligen Strangaufnahme (3) in einer Funktionsposition anbringbaren Andrückeinrichtung (13), die ein federbelastetes, bewegbares Drückerteil (27) aufweist, das bei der Funktionsposition eine Haltekraft auf in die jeweilige Strangaufnahme (3) eingelegte Strangelemente (11) ausübt, wobei eine lösbare Riegeleinrichtung (15) vorgesehen ist, die bei der Funktionsposition zwischen Andrückeinrichtung (13) und Strangaufnahme (3) eine Verriegelung durch formschlüssigen Riegeleingriff ermöglicht, **dadurch gekennzeichnet, dass** die Andrückeinrichtung (13) einen Grundkörper (25) aufweist, an dem das Drückerteil (27) verschiebbar geführt ist und an dem ein Riegelkörper (49) der Riegeleinrichtung für Bewegungen zwischen einer wirksamen Verriegelungsposition und einer unwirksamen Freigabeposition bewegbar angeordnet ist.

2. Befestigungssystem nach Anspruch 1, **dadurch gekennzeichnet, dass** die Andrückeinrichtung (13) an der zugeordneten Strangaufnahme (3) für Schwenkbewegungen zwischen die Öffnung freigebenden Offenstellungen und der Funktionsstellung angelenkt ist, in der sie die Öffnung zumindest teilweise verschließt.

3. Befestigungssystem nach einem der vorstehenden Ansprüche, **dadurch gekennzeichnet, dass** das Drückerteil (27) die Form einer im großen Ganzen rechteckförmigen Schale besitzt, deren Boden (41) an zu fixierende Strangelemente (11) andrückbar ist, dass der Grundkörper (25) einen Schalenteil (31) aufweist, an dessen Innenwand (33) die Schale des Drückerteils (27) bewegbar geführt ist und dass der durch Schale des Drückerteils (27) und Schalenteil (31) des Grundkörpers (25) gebildete Innenraum als Federgehäuse für eine zwischen Grundkörper (25) und Drückerteil (27) wirkende Federanordnung (39) vorgesehen ist.

4. Befestigungssystem nach einem der vorstehenden Ansprüche, **dadurch gekennzeichnet, dass** der Grundkörper (25) an seinem einen Ende eine Lagerstelle (61) zur Bildung eines Schwenklagers (23) an einem Rand (8) der Öffnung der betreffenden Strangaufnahme (3) aufweist, die am gegenüberliegenden, anderen Rand (7) der Öffnung eine Rastvertiefung (21) für formschlüssigen Riegeleingriff eines Riegelhakens (15) des Riegelkörpers (49) der Riegeleinrichtung aufweist.

5. Befestigungssystem nach einem der vorstehenden Ansprüche, **dadurch gekennzeichnet, dass** der Grundkörper (25) eine zu der Lagerstelle (61) entgegengesetzte Frontwand (57) und eine den Schalenteil (31) an der vom Drückerteil (27) abgewandten Oberseite (65) begrenzende Wand (47) aufweist, dass an deren Oberseite (65) eine Führung gebildet ist, längs deren der Riegelkörper (49) für Bewegungen zwischen Riegelstellung, in der der Riegelhaken (15) des Riegelkörpers (49) über die Frontwand (67) vorsteht, und gegen die Lagerstelle (61) hin zurückgezogenen Freigabestellungen bewegbar ist, und dass der Riegelkörper (49) durch Federkraft (51) gegen die Riegelstellung vorgespannt ist.

6. Befestigungssystem nach einem der vorstehenden Ansprüche, **dadurch gekennzeichnet, dass** eine am Grundkörper (25) anbringbare Kappe (29) vorgesehen ist, die in der am Grundkörper (25) angebrachten Stellung die an der Oberseite der zugeordneten Wand (47) des Grundkörpers (25) befindliche Führung des Riegelkörpers (49) sowie mit einem Endteil (67) die Frontwand (57) überdeckt, und dass im Endteil (67) mindestens ein Durchgang (69) für den Durchtritt von Teilen des Riegelkörpers (49) vorgesehen ist.

7. Befestigungssystem nach einem der vorstehenden Ansprüche, **dadurch gekennzeichnet, dass** der Riegelkörper (49) als Teile, die bei der Riegelstellung durch Durchgänge (69) des Endteils (67) hindurch vorstehen, den Riegelhaken (15), der bei der Funktionsposition in die Rastvertiefung (21) der Strangaufnahme (3) formschlüssig eingreift, sowie einen Lösevorsprung (17) aufweist, der am Riegelkörper (49) gegenüber dem Riegelhaken (15) derart versetzt ist, dass er bei der Funktionsposition außerhalb der Strangaufnahme (3) zugänglich ist.

8. Befestigungssystem nach einem der vorstehenden Ansprüche, **dadurch gekennzeichnet, dass** im Schalenteil (31) des Grundkörpers (25) und in der Schale des Drückerteils (27) Führungszylinder (35, 37) ausgebildet sind, die miteinander Teleskopführungen für die Bewegungen des Drückerteils (27) relativ zum Grundkörper (25) bilden, und dass die Federanordnung Schrauben-Druckfedern (39) aufweist, die die Außenseite der Teleskopführungen umgeben.

9. Befestigungssystem nach einem der vorstehenden Ansprüche, **dadurch gekennzeichnet, dass** an einem die Lagerstelle (61) bildenden Lagerungsansatz (60) des Grundkörpers (25) im Abstand von der Lagerstelle (61) mindestens ein nach außen vorstehender Rastvorsprung in Form einer gewölbten Kuppe (62) ausgebildet ist und dass an der Kappe (29) in Abstand von deren Lagerstelle (63) jeweils eine Rastbohrung (64) entwickelt ist, die bei den Grundkörper (25) aufgesetzter Kappe (29) in Zusammenwirkung mit der jeweiligen Kuppe (62) die Kappe (29) mit dem Grundkörper (25) verrastet.

## Claims

1. A fastening system for line elements (11), such as cables, hoses or pipes, in particular for wind turbines, comprising at least one line receiver (3) with an opening provided for the insertion of at least one line element (11), and comprising a pressing device (13) that can be attached at the opening of the respective line receiver (3) in a functional position, that has a spring-loaded, moveable pusher part (27) that, in the functional position, exerts a holding force upon line elements (11) inserted into the respective line receiver (3), a releaseable locking device (15) being provided which, in the functional position, enables locking by positive locking engagement between the pressing device (13) and the line receiver (3), **characterised in that** the pressing device (13) has a base body (25) on which the presser part (27) is displaceably guided and on which a locking body (49) of the locking device is moveably disposed for movements between an effective locking position and an ineffective release position.

2. The fastening system according to Claim 1, **characterised in that** the pressing device (13) is hinged at the assigned line receiver (3) for swivel movements between open positions that clear the opening and the functional position in which it at least partially closes the opening.

3. The fastening system according to any of the preceding claims, **characterised in that** the presser part (27) is in the form of a shell that is on the whole rectangular, the bottom (41) of which can be pressed onto line elements (11) to be fixed, that the base body (25) has a shell part (31) on the inner wall (33) of which the shell of the presser part (27) is guided moveably, and that the interior formed by the shell of the presser part (27) and the shell part (31) of the base body (25) is provided as a spring housing for a spring arrangement (39) acting between the base body (25) and the presser part (27).

4. The fastening system according to any of the preceding claims, **characterised in that** the base body (25) has on its one end a bearing point (61) for the formation of a swivel bearing (23) at one edge (8) of the opening of the respective line receiver (3) which has a detent indentation (21) for positive locking engagement of a locking hook (15) of the locking body (49) of the locking device at the opposite other edge (7) of the opening.

5. The fastening system according to any of the preceding claims, **characterised in that** the base body (25) has a front wall (57) opposite the bearing point (61) and a wall (47) delimiting the shell part (31) at the top (65) facing away from the presser part (27), that a guide is formed on its top (65), along which the locking body (49) can be moved for movements between the locking position, in which the locking hook (15) of the locking body (49) projects over the front wall (67), and release positions retracted towards the bearing point (61), and that the locking body (49) is pre-tensioned towards the locking position by spring force (51).

6. The fastening system according to any of the preceding claims, **characterised in that** a cap (29) that can be attached to the base body (25) is provided which, in the position attached to the base body (25) covers the guide of the locking body (49) located on the top of the assigned wall (47) of the base body (25) and covers the front wall (57) with an end part (67), and that at least one passage (69) through which parts of the locking body (49) can pass is provided in the end part (67).

7. The fastening system according to any of the preceding claims, **characterised in that** the locking body (49) has, as parts which project through passages (69) of the end part (67) in the locking position, the locking hook (15) that positively engages in the detent indentation (21) of the line receiver (3) in the functional position, and a releasing projection (17) that is offset with respect to the locking hook (15) on the locking body (49) such that it is accessible outside of the line receiver (3) in the functional position.

8. The fastening system according to any of the preceding claims, **characterised in that** there are formed in the shell part (31) of the base body (25) and in the shell of the presser part (27) guide cylinders (35, 37) that together form telescopic guides for the movements of the presser part (27) relative to the base body (25), and that the spring arrangement has helical compression springs (39) that surround the outside of the telescopic guides.

9. The fastening system according to any of the preceding claims, **characterised in that** at least one outwardly projecting detent projection in the form of a curved dome (62) is formed on a bearing extension (60) of the base body (25) that forms the bearing point (61) a distance away from the bearing point (61), and that a detent bore hole (64) is respectively developed on the cap (26) a distance away from its bearing point (63), which bore hole engages the cap (29) with the base body (25) in co-operation with the respective dome (62) when the cap (29) is placed over the base body (25).

## Revendications

1. Système de fixation d'éléments (11) oblongs, comme des câbles, des tubes souples ou des tuyaux, notamment dans des éoliennes, comprenant au moins un logement (3) oblong ayant une ouverture prévue pour l'insertion d'au moins un élément (11) oblong et ayant un dispositif (13) de poussée pouvant être mis en une position fonctionnelle sur l'ouverture du logement (3) oblong, ayant une partie (27) formant poussoir, mobile, soumise à l'action d'un ressort et appliquant, en la position fonctionnelle, une force de maintien à des éléments (11) oblongs insérés dans le logement (3) oblong, dans lequel il est prévu un dispositif (15) de verrouillage déverrouillable qui, en la position fonctionnelle, permet, entre le dispositif (13) de poussée et le logement (3) oblong, un verrouillage par intervention de verrouillage par complémentarité de forme, **caractérisé en ce que** le dispositif (13) de poussée a un corps (25) de base, sur lequel la partie (27) de poussoir est guidée à coulissement et sur lequel un corps (49) de verrouillage du dispositif de verrouillage est monté, mobile, pour déplacement entre une position active de verrouillage et une position de déverrouillage inactive.

2. Système de fixation suivant la revendication 1, **caractérisé en ce que** le dispositif (13) de poussée est articulé sur le logement (3) oblong associé pour des déplacements de pivotement entre des positions d'ouverture dégageant l'ouverture et la position fonctionnelle dans laquelle il ferme l'ouverture au moins en partie.

3. Système suivant l'une des revendications précédentes, **caractérisé en ce que** la partie (27) formant poussoir a la forme, grossièrement, d'une coquille rectangulaire dont le fond (41) peut être poussé sur des éléments (11) oblongs à immobiliser, **en ce que** le corps (25) de base a une partie (31) de coquille sur la paroi (33) intérieure de laquelle la coquille de la partie (27) formant poussoir est guidée avec possibilité de se déplacer et **en ce que** l'espace intérieur formé par la coquille de la partie (27) formant poussoir et de la partie (31) de coquille du corps (25) de base est prévu comme enveloppe d'un agencement (39) de ressort agissant entre le corps (25) de base et la partie (27) formant poussoir.

4. Système suivant l'une des revendications précédentes, **caractérisé en ce que** le corps (25) de base a, à l'une de ses extrémités, un point (61) de palier pour former un palier (23) pivotant à un bord (8) de l'ouverture du logement (3) oblong concerné, qui a, à l'autre bord (7) opposé de l'ouverture, une cavité (21) d'encliquetage pour l'intervention par verrouillage par complémentarité de forme d'un crochet (15) de verrouillage du corps (49) de verrouillage du dispositif de verrouillage.

5. Système suivant l'une des revendications précédentes, **caractérisé en ce que** le corps (25) de base a une paroi (57) avant opposée au point (61) de palier et une paroi (47) délimitant la partie (31) de coquille au côté (65) supérieur et éloigné de la partie (27) formant poussoir, **en ce qu'**il est formé sur son côté (65) supérieur un guidage, le long duquel le corps (49) de verrouillage est mobile pour des déplacements entre une position de verrouillage dans laquelle le crochet (15) de verrouillage du corps (99) de verrouillage dépasse de la paroi (67) avant et des positions de libération, en retrait par rapport au point (61) de palier, et **en ce que** le corps (49) de verrouillage est précontraint vers la position de verrouillage par la force (51) du ressort.

6. Système suivant l'une des revendications précédentes, **caractérisé en ce qu'**il est prévu une coiffe (29), qui peut être mise sur le corps (25) de base et qui, en la position dans laquelle elle est mise sur le corps (25) de base, recouvre le guidage, se trouvant du côté supérieur de la paroi (47) associée du corps (25) de base, du corps (49) de verrouillage ainsi que, par une partie (67) d'extrémité, la paroi (57) avant et **en ce qu'**il est prévu dans la partie (67) d'extrémité au moins un passage (69) pour le passage de parties du corps (49) de verrouillage.

7. Système suivant l'une des revendications précédentes, **caractérisé en ce que** le corps (49) de verrouillage a comme parties, qui, dans la position de verrouillage, passent dans des passages (69) de la partie (67) d'extrémité, le crochet (15) de verrouillage, qui pénètre à complémentarité de forme dans la position fonctionnelle dans la cavité (21) d'encliquetage du logement (3) oblong, ainsi qu'une saillie (17) de déverrouillage, qui est décalée sur le corps (49) de verrouillage par rapport au crochet (15) de verrouillage, de manière à être accessible en la position fonctionnelle à l'extérieur du logement (3) oblong.

8. Système suivant l'une des revendications précédentes, **caractérisé en ce qu'**il est formé, dans la partie (31) de coquille du corps (25) de base et dans la coquille de la partie (27) formant poussoir, des cylindres (35, 37) de guidage, qui forment, les uns avec les autres, des guidages télescopiques pour les mouvements de la partie (27) formant poussoir par rapport au corps (25) de base et **en ce que** l'agencement de ressort a des ressorts (39) hélicoïdaux de compression, qui entourent le côté extérieur des guidages télescopiques.

9. Système suivant l'une des revendications précédentes, **caractérisé en ce qu'**il est formé sur un prolongement (60) de montage, formant le point (61) de palier, du corps (25) de base, à distance du point (61) de palier, au moins une saillie d'encliquetage faisant saillie vers l'extérieur sous la forme d'un mamelon (62) et **en ce qu'**il est développé sur la coiffe (29) à distance de son point (63) de palier respectivement un trou (64) d'encliquetage, qui, lorsque la coiffe (29) est mise sur le corps (25) de base, encliquette, en coopération avec le mamelon (62) respectif, la coiffe (29) avec le corps (25) de base.
